# EUROPEAN PATENT SPECIFICATION

(11) **EP 2 481 878 B1**
(45) Date of publication and mention of the grant of the patent: **14.10.2015**
(21) Application number: 12152045.6
(22) Date of filing: 23.01.2012
(51) Int. Cl.: E06B 11/04, E06B 11/02, H02J 7/02, H02J 5/00

(54) **Gate with lighting**
Tor mit Beleuchtung
Barrière équipée de dispositifs d'éclairage

(30) Priority: 28.01.2011 NL 2006090
(43) Date of publication of application: 01.08.2012
(73) Proprietor: Heras B.V., 5688 ZG Oirschot (NL)
(72) Inventor: Ruigrok, Jan Rudolf, 5631 LD Eindhoven (NL)
(74) Representative: D'Halleweyn, Nele Veerle Trees Gertrudis

(56) References cited:
- EP-A1- 0 848 129
- EP-A2- 1 318 260
- WO-A1-2008/098623

## Description

The present invention relates to a gate leaf, in particular a gate leaf for a sliding gate, comprising a horizontal beam and a number of vertical bars.

NL 8302007 describes a sliding gate with a horizontal beam and a number of vertical bars. The horizontal beam is a tubular profile provided with a series of holes for receiving the vertical bars. The horizontal beam is formed as a tubular profile, a longitudinal side of which is embodied with a guide channel. In the existing sliding gates lighting means are typically arranged on non-moving parts of the gate close to the outer ends of the gate opening. This has the drawback that the gate leaf itself is poorly visible in failing light.

EP 1318260 shows in figure 7 and 8 a gate leaf with a flashing light 33 in a closed and open position, respectively. A first coil 5 is provided in a coupling device 1 which is connected with a fixed upright being 29. The gate leaf is provided with a second coupling device 2 with a second coil 17. In the closed position of the gate leaf the coils are inductively coupled and provide electrical power for the lighting means 33.

EP 1 318 260 discloses all the features of the preamble of claim 1.

The present invention has for its object to provide a gate leaf of the type stated in the preamble where the visibility of the gate leaf is better.

The gate leaf of the invention is distinguished by the features of the characterising portion of claim 1.

The gate leaf comprises a horizontal upper profile and a vertical end profile, wherein a corner profile is received between the horizontal upper profile and the vertical end profile, and wherein the lighting means are arranged on this corner profile. The lighting means can in this way be built into the gate in elegant and robust manner.

The lighting means are arranged between a holder and a translucent outer cover, wherein the holder is fixed to the corner profile. The outer cover is then typically manufactured from a translucent, for instance semitransparent, material, preferably in a colour which attracts attention.

The gate leaf is provided with a first coil arranged such that it can co-act with a static second coil provided adjacently of the gate leaf and connected to a power supply. Received in the gate leaf are lighting means coupled to the first coil such that they are powered via this first coil when the gate is at rest or in motion. An additional energy storage can optionally be provided in or on the gate leaf, see below.

By providing a first co-displacing coil and a static coil which are coupled the moment the gate moves, lighting means fitted in the gate can be powered in a convenient manner and the gate will be readily visible during opening, this also for instance in dark weather conditions.

According to an advantageous embodiment, the first coil is arranged on the gate leaf such that during movement it is coupled inductively to the second static coil. According to a possible embodiment, there is provided on the gate leaf an elongate medium of electromagnetic material which runs through the first coil and the second static coil for transfer of energy and/or data via the cable from the first coil to the second coil. This elongate medium of electromagnetic material is for instance a cable in which a wire of electromagnetic material is received, or a rod of electromagnetic material. During movement of the gate the elongate medium will thus move through the second static coil and so be able to transfer energy and/or data continuously to the first coil, irrespective of the position of the gate leaf. In the case of a flexible cable, this can for instance be tensioned between two points on the gate leaf.

According to an advantageous embodiment, an energy storage system and regulating and/or control means are incorporated in the gate leaf, wherein the first coil is connected to the energy storage system and the regulating and/or control means are adapted to actuate the lighting means with energy from the energy storage system when the gate leaf is in motion and/or at rest. The regulating means can for instance convert the current running through the first coil to a voltage level suitable for the lighting means, and the control means can for instance be adapted to power the lighting means only in specific conditions, for instance when there is insufficient daylight.

According to an advantageous embodiment, the lighting means are adapted to generate a flashing light such that the lighting is more noticeable.

According to an advantageous embodiment, the lighting means are arranged close to a corner of the gate leaf at an outer end adjacent to the gate opening in the opened position of the gate. During opening of the gate this corner will after all be the most important corner that has to be visible.

According to an advantageous embodiment, the corner profile is a multipart corner profile, and the lighting means are received in an assembly arranged clampingly in the multipart corner profile.

According to another aspect of the invention, the gate leaf comprises at least one horizontal beam with the form of a tubular profile having a channel which extends in the longitudinal direction thereof and in which an additional lighting means, typically a LED strip, is received for the purpose of lighting the gate leaf. This additional lighting can be further provided with actuating means which can for instance be adapted to cause the additional lighting means to illuminate at the moment the gate is closed and/or at the moment it is dark.

In a possible embodiment the gate leaf comprises a horizontal upper beam and a horizontal lower beam, the upper beam and lower beam each being provided with a channel for guiding the gate, wherein the upper beam and/or the lower beam have the form of a tubular profile having a channel which extends in the longitudinal direction thereof and in which a LED strip is received for the purpose of lighting the gate leaf.

According to an advantageous embodiment, the tubular profile is provided with a downward opening guide channel for a set of guide rollers for guiding the gate, wherein the channel in which the LED strip is received is provided above the guide channel. The tubular profile is preferably symmetrical, and provided in both halves of the tubular profile are a guide channel and a LED receiving channel which can then be in use as required.

According to yet another aspect of the invention, the gate leaf comprises a horizontal upper beam, and the upper beam is provided on its upper side with a series of solar cells connected to an energy storage system arranged in the gate leaf. The upper surface of the upper beam is in this way used in a useful manner to create energy which can be used to power different elements built into the gate leaf, such as for instance lighting means.

The invention further relates to a gate leaf which is distinguished in that a horizontal beam has the form of a tubular profile having a channel which extends in the longitudinal direction thereof and in which a LED strip is received for the purpose of lighting the gate leaf. According to an advantageous embodiment, the beam is an upper beam and the tubular profile is provided with a downward opening guide channel for a set of guide rollers for guiding the gate, wherein the channel in which the LED strip is received is provided above the guide channel. According to an advantageous embodiment, the horizontal beam is provided with a number of tensioning wires for tensioning the horizontal beam. According to a possible embodiment, which is particularly useful for long gates, the or each horizontal beam can be constructed from a plurality of mutually connecting tubular profiles. Each tubular profile is then preferably aligned relative to an adjacent tubular profile using a plurality of centering pins, wherein each centering pin protrudes partially into a first tubular profile and partially into an adjacent second tubular profile of the plurality of tubular profiles, and wherein at least one tensioning wire clamps the plurality of profiles against each other. Such a centering pen can be embodied as described in detail in the patent application in the name of applicant with the title "Anchoring assembly and gate comprising such an assembly", filed on the same day as the present application. The text of this application is included integrally here by way of reference.

The present invention will be further elucidated on the basis of a number of non-limitative exemplary embodiments of a gate according to the invention with reference to the accompanying drawing. In the drawing:
Figure 1 is a perspective view of an embodiment of a sliding gate according to the invention as seen from the front side of the gate;
Figure 2 is a perspective view of the sliding gate of figure 1 as seen from the rear side of the gate;
Figure 3 is a perspective detail view of the sliding gate of figure 1 as seen from the underside of the gate;
Figure 4 shows a cross-section of the sliding gate of figure 1 roughly at the height of the static coil 12;
Figure 5 is a cut-away perspective detail view of a corner of the gate of figure 1;
Figure 6 is a cut-away perspective view of the assembly 20 of figure 5 in which LED lighting is arranged;
Figure 7 shows a cross-section through the upper beam 3 of figure 1 at the position of the column 5;
Figure 8 shows a block diagram illustrating the power supply of the lighting means.

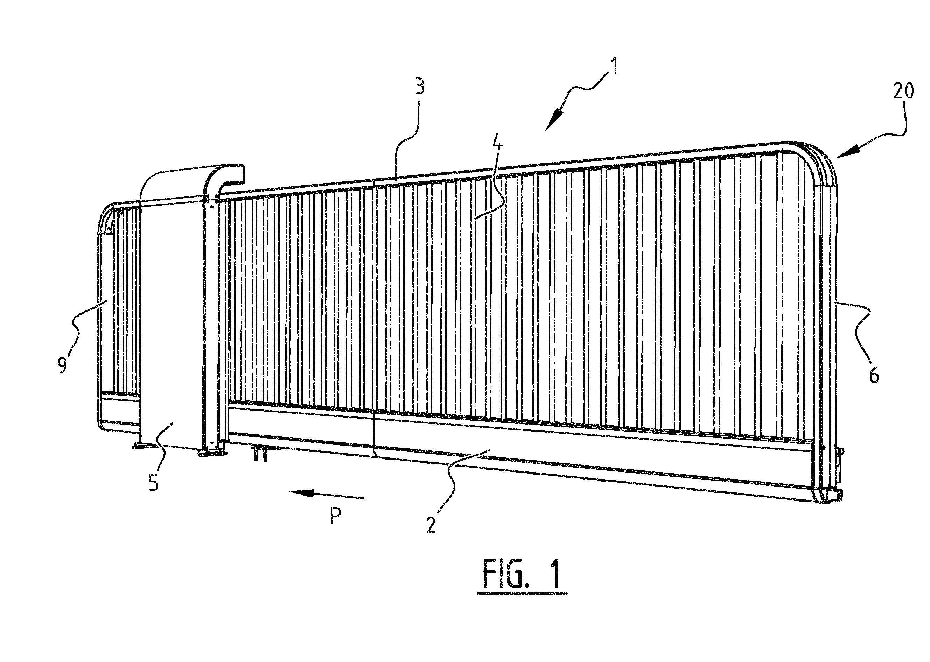

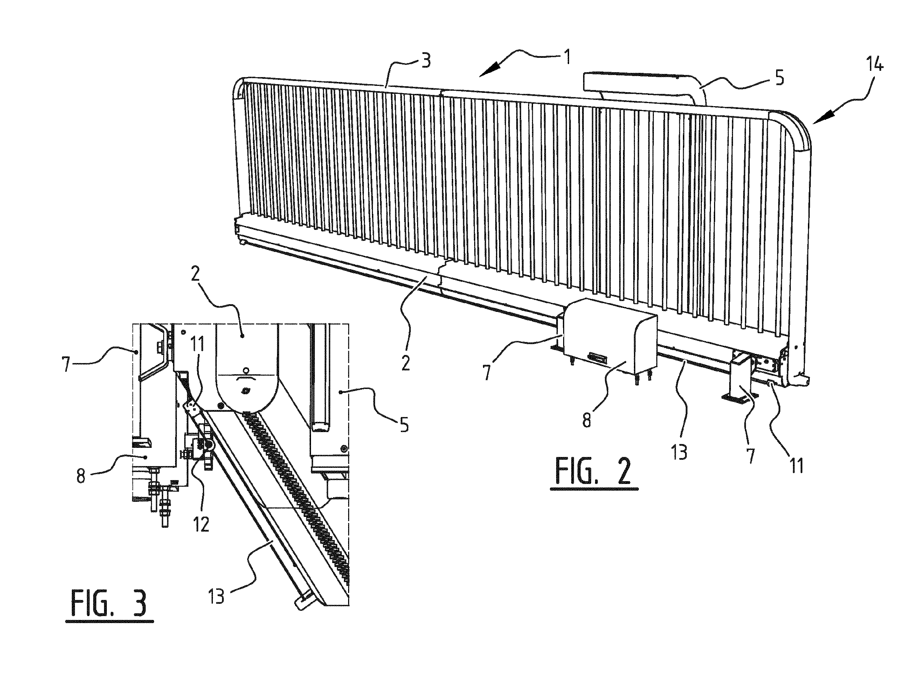

Figure 1 illustrates a possible embodiment of a sliding gate 1 according to the invention. Sliding gate 1 is provided with a horizontal lower beam 2, a horizontal upper beam 3 and two vertical end profiles 6, 8. Note that it is also possible to provide only one horizontal beam, which is then typically mounted somewhat higher than the lower beam in the embodiment of figure 1. The horizontal lower and upper beams 2, 3 are each provided with a number of holes for mounting vertical bars 4 therein. In the shown embodiment a large number of bars 4 are provided at a mutual pitch distance which is relatively small. According to another possible embodiment, the bars are at a greater distance from each other and sheet filling, for instance sheet filling with perforations, is provided between the bars. A number of tensioning wires, cables or rods can be provided in the horizontal lower beam 2 for tensioning the horizontal beam 2 such that sagging remains limited. The horizontal lower beam 2 is provided with a guide channel for receiving therein a guide system for making the horizontal beam reciprocally rollable along support feet 7, see figure 2. Two support feet 7 are provided in the shown embodiment, although the skilled person will appreciate that more or fewer support feet can be provided in accordance with the length of the gate. The reciprocating sliding movement can for instance be realized with a gear rack-pinion system, wherein the pinion is driven by a motor accommodated in a casing 8. For more details of the guide system reference is made to the patent application in the name of applicant with the title "Anchoring assembly and gate comprising such an assembly", filed on the same day as the present application and included integrally here by way of reference.

In the shown embodiment a column 5 is provided on the front side of gate leaf 1, here substantially opposite casing 8. Information such as a name or a logo can be given on column 5 and lighting, control means, sensors and the like can for instance be arranged in column 5. In the shown embodiment it will be possible to slide gate leaf 1 open in the direction of arrow P.

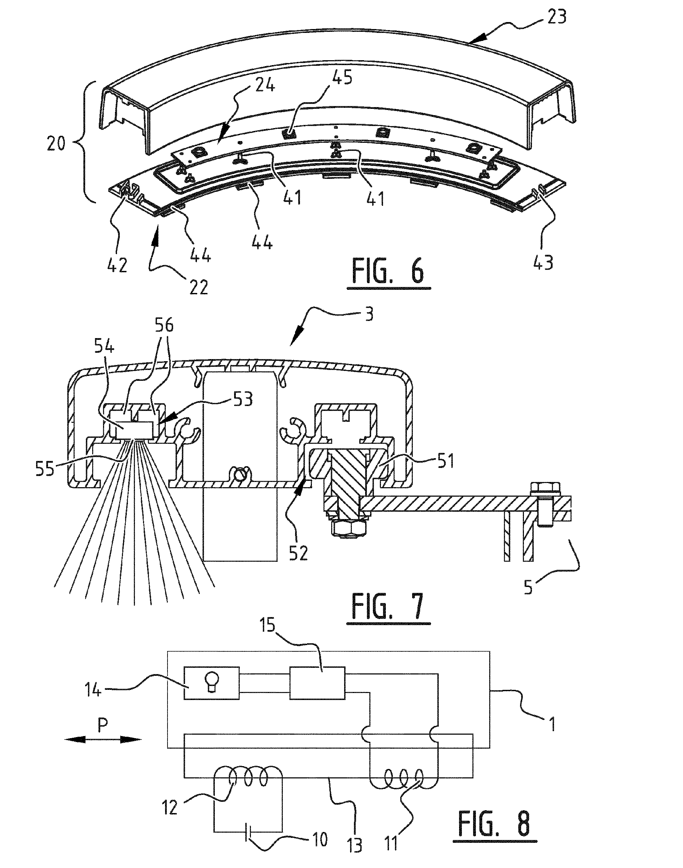

Gate leaf 1 is provided on its rear side with a first coil 11 which co-displaces with gate leaf 1. This coil 11 is coupled inductively to a second static coil 12 via a cable 13 extending over a part of the length of gate leaf 1, see figure 2 and figure 3. The second static coil 12 is connected to a power supply 10, for instance to the mains electricity or to a battery. This is illustrated schematically in the block diagram of figure 8. The cable is connected at either end to the horizontal beam of the gate, which thus as it were closes the circuit. Note that it is also possible to provide a return cable on the gate in order to close the circuit. The skilled person will further appreciate that one or more cables 13 can be provided in combination with one or more first coils and one or more second static coils. One or more wires of electromagnetic material can for instance be provided in each cable. When gate leaf 1 is in motion, first coil 11 is coupled inductively via a conductive cable 13 to second coil 12 which can be employed to power lighting means 14. The skilled person will appreciate that a further intermediate circuit 15 can be provided between first coil 11 and lighting means 14 to provide a suitable supply voltage/current to lighting means 14. The intermediate circuit 15 can further be adapted to receive data via first coil 11 for the purpose of actuating the lighting means on the basis of additional inputs or received data, such as for instance measurement data from a light sensor. An energy storage system (not shown) such as a battery can further be provided on gate leaf 1 for temporarily storing energy obtained via first coil 11. In this case control means are then preferably provided to actuate the lighting means, for instance to power the lighting means when gate leaf 1 is in motion.

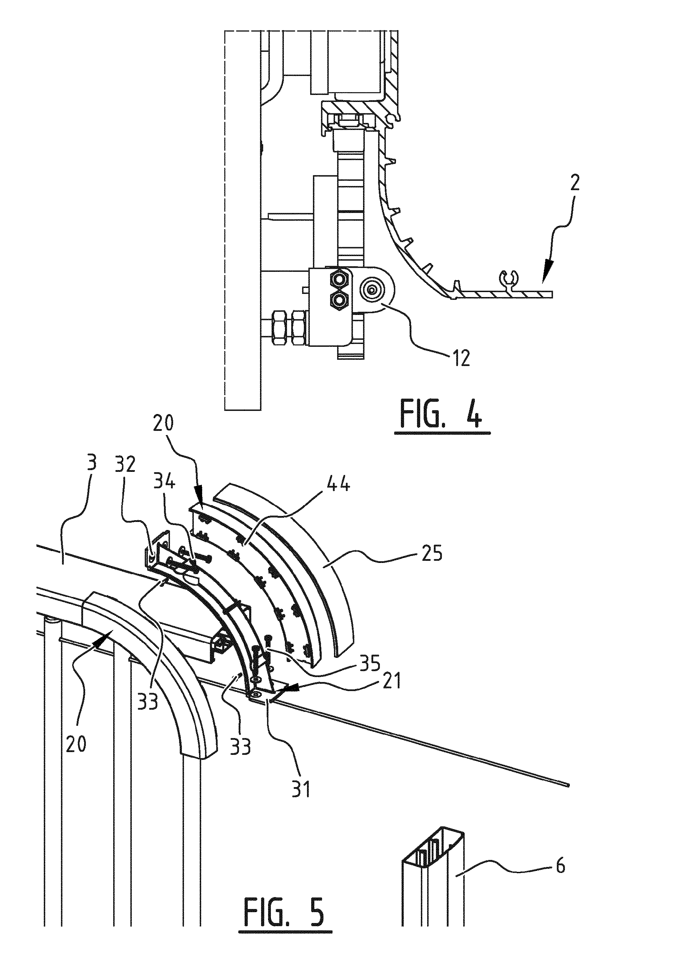

The lighting means will now be discussed in more detail with reference to figures 5 and 6. In a preferred embodiment the lighting means are adapted to generate a flashing light close to a corner 20 of gate leaf 1 which is adjacent to the opening created when the gate is in the open position. Figure 5 shows in detail a cut-away perspective view of corner 20 of gate leaf 1. Provided in this corner is a multipart corner profile 21, 25 which here takes a curved form for the purpose of forming a rounded corner. An assembly 20 in which lighting means are arranged is clamped on either side between the inner bend part 21 and the outer bend part 25 of this corner profile. As shown in figure 6, assembly 20 comprises a PCB holder 22 and an outer cover 23. Lighting means 14, here in the form of a PCB 24 on which an array of LEDs 45 are arranged, are received between this PCB holder 22 and outer cover 23. Corner profile 21 is provided with a first fixing flange 31 for connection to the vertical end profile 6 by means of two screws 34, and with a second fixing flange 32 for connection to upper beam 3, also by means of two screws 35.

The PCB holder 22 is provided on its side facing away from the corner profile with a number of fastening means 41 for fastening thereon of the PCB 24 on which the lighting means are arranged. Outer cover 23 is attached to the PCB holder 22, here by means of adhesive, although the skilled person will appreciate that other connections, such as snap connections, also fall within the scope of the invention. The PCB holder 22 is provided at its outer end with cable through-feeds 42, 43 for throughfeed of an electrical cable. The supply of energy to the lighting means can then take place through upper beam 3 and/or through the vertical end profile 6. PCB holder 22 is further provided with a number of clamping elements 44 provided at a mutual pitch distance along the upper edge and lower edge on the side thereof facing toward corner profile 21. These clamping elements 44 allow the assembly 20 to be clamped between inner bend part 21 and outer bend part 25 and secured with screws 33. Assembly 20 comprises printed circuit board 24, PCB holder 22 and outer cover 23, which is typically preassembled in splash watertight manner using adhesive and/or screws.

Figure 7 shows a cross-section of upper beam 3 into which additional lighting means can be integrated. Upper beam 3 is formed as a symmetrical tubular profile provided in each half on its underside with a first downward opening guide channel 52, and a second receiving channel 53 located thereabove for receiving lighting means therein. In the illustrated embodiment only one guide channel 52 is used for guiding and the receiving channel in the other half of the tubular profile is used for mounting of lighting means. The skilled person will however appreciate that the lighting means can also be provided in both receiving channels or only in the receiving channel above the guide means. Guide channel 52 is adapted to receive therein guide wheels 51 which are mounted rotatably around a vertical shaft which is connected via a fixing arm to column 5. The lighting means can for instance consist of a strip 54, for instance a printed circuit board, on the underside of which LED elements 55 are provided. The term strip should be broadly interpreted here and also includes flexible LED cords. Upper beam 3 thus has a threefold function: connecting the bars and/or other structural plates or profiles, providing guiding and accommodation for the additional lighting means. These additional lighting means are intended particularly to light the gate when it is not in motion, and power supply to the additional lighting means can for instance be realized via a slide contact.

According to a possible embodiment (not shown), solar cells can be arranged on the upper side of upper beam 3, these solar cells being connected to an energy storage such as a battery. The lighting means in corner profile 21, 25 and the lighting means in upper beam 3 can then be supplied with energy via this energy storage.

The skilled person will appreciate that the invention is not limited to the above described exemplary embodiments, and that many variants can be envisaged which fall within the scope of the invention, which is defined solely by the following claims.

## Claims

1. Gate leaf (1), comprising a horizontal beam (2) and a number of vertical bars (4), wherein lighting means (14; 24, 45) are received in the gate leaf, wherein the gate leaf is provided with a first coil (11) arranged such that it can co-act with a static second coil (12) provided adjacently of the gate and connected to a power supply (10), wherein the lighting means are coupled to the first coil such that they are powered via this first coil; **characterized in that**
the gate leaf comprises a horizontal upper profile (3) and a vertical end profile (6), wherein a corner profile (21) is received between the horizontal upper profile and the vertical end profile, and wherein the lighting means (14; 24, 45) are arranged on this corner profile,
and **in that** the lighting means are arranged between a holder (22) and a translucent outer cover (23), wherein the holder is fixed in or on the corner profile.

2. Gate leaf as claimed in claim 1, **characterized in that** the corner profile is a multipart corner profile (21, 25), and that the lighting means are received in an assembly (20) arranged clampingly in the multipart corner profile.

3. Gate leaf as claimed in claim 1, **characterized in that** the first coil is arranged on the gate leaf such that during movement it is coupled inductively to the second static coil.

4. Gate leaf as claimed in claim 2 or 3, **characterized in that** there is provided on the gate leaf an elongate medium (13) of electromagnetic material which runs through the first coil and the second static coil for inductive coupling of the first coil to the second coil.

5. Gate leaf as claimed in any of the foregoing claims 2-4, **characterized in that** an energy storage system and control and/or regulating means (15) are incorporated in the gate leaf, wherein the first coil is connected to the energy storage system and the control and/or regulating means are adapted to actuate the lighting means with energy from the energy storage system.

6. Gate leaf as claimed in any of the foregoing claims, **characterized in that** the lighting means are adapted to generate a flashing light.

7. Gate leaf as claimed in any of the foregoing claims, **characterized in that** the lighting means (14; 24, 45) are arranged close to a corner of the gate leaf at an outer end adjacent to the gate opening in the opened position of the gate.

8. Gate leaf as claimed in any of the foregoing claims, **characterized in that** the horizontal upper profile has the form of a tubular profile having a channel which extends in the longitudinal direction thereof and in which a LED strip (54) is received for the purpose of lighting the gate leaf.

9. Gate leaf as claimed in any of the foregoing claims, **characterized in that** the gate comprises a horizontal upper beam (3) and a horizontal lower beam (2), the upper beam and lower beam each being provided with a channel for guiding the gate, wherein the upper beam and/or the lower beam have the form of a tubular profile having a channel which extends in the longitudinal direction thereof and in which a LED strip (54) is received for the purpose of lighting the gate leaf.

10. Gate leaf as claimed in claim 9, **characterized in that** the upper beam has the form of a tubular profile which is provided with a downward opening guide channel (52) for a set of guide rollers (51) for guiding the gate, wherein the channel in which the LED strip is received is provided above the guide channel.

11. Gate leaf as claimed in any of the foregoing claims, **characterized in that** the gate leaf comprises a horizontal upper beam (3), and that the upper beam is provided on its upper side with a series of solar cells connected to an energy storage system arranged in the gate leaf.

## Patentansprüche

1. Torblatt (1), umfassend einen horizontalen Träger (2) und eine Anzahl von vertikalen Trägern (4), wobei Leuchtmittel (14, 24, 45) in dem Torblatt aufgenommen sind, wobei das Torblatt mit einer ersten Spule (11) vorgesehen ist, die derart angeordnet ist, dass sie mit einer zweiten statischen Spule (12) zusammenwirken kann, die benachbart zu dem Tor vorgesehen ist, und mit einer Stromversorgung (10) verbunden ist, wobei die Leuchtmittel mit der ersten Spule gekoppelt sind, derart dass diese über die erste Spule gespeist werden; **dadurch gekennzeichnet, dass**
das Torblatt ein horizontales, oberes Profil (3) und ein vertikales Endprofil (6) umfasst, wobei ein Eckprofil (21) zwischen dem horizontalen, oberen Profil und dem vertikalen Endprofil aufgenommen ist, und wobei die Leuchtmittel (14, 24, 45) an diesem Eckprofil angeordnet sind, und **dadurch, dass** die Leuchtmittel zwischen einer Halterung (22) und einer lichtdurchlässigen, äußeren Abdeckung (23) angeordnet sind, wobei die Halterung in oder an dem Eckprofil befestigt ist.

2. Torblatt nach Anspruch 1, **dadurch gekennzeichnet, dass** das Eckprofil als ein vielteiliges Eckprofil (21, 25) ausgebildet ist, und dass die Leuchtmittel in einem Aufbau (20), der in dem vielteiligen Eckprofil geklemmt angeordnet ist, aufgenommen sind.

3. Torblatt nach Anspruch 1, **dadurch gekennzeichnet, dass** die erste Spule derart an dem Torblatt angeordnet ist, dass sie während einer Bewegung induktiv mit der zweiten statischen Spule gekoppelt ist.

4. Torblatt nach einem der Ansprüche 2 oder 3, **dadurch gekennzeichnet, dass** an dem Torblatt ein längliches Medium (13) aus elektromagnetischem Material vorgesehen ist, das die erste Spule und die zweite statische Spule durchläuft, zum induktiven Koppeln der ersten Spule mit der zweiten Spule.

5. Torblatt nach einem der vorherigen Ansprüche 2 - 4, **dadurch gekennzeichnet, dass** ein Energiespeichersystem und Steuer- und/ oder Regulierungsmittel (15) in dem Torblatt enthalten sind, wobei die erste Spule mit dem Energiespeichersystem verbunden ist und die Steuer- und/ oder Regulierungsmittel geeignet sind, die Leuchtmittel mit Energie von dem Energiespeichersystem zu betätigen.

6. Torblatt nach einem der vorherigen Ansprüche, **dadurch gekennzeichnet, dass** die Leuchtmittel geeignet sind, ein Blinklicht zu generieren.

7. Torblatt nach einem der vorherigen Ansprüche, **dadurch gekennzeichnet, dass** die Leuchtmittel (14, 24, 45) nahe einer Ecke des Torblatts an einem äußeren Ende benachbart zur Toröffnung in der geöffneten Position des Tors angeordnet sind.

8. Torblatt nach einem der vorherigen Ansprüche, **dadurch gekennzeichnet, dass** das horizontale, obere Profil die Form eines rohrförmigen Profils aufweist, das einen Kanal aufweist, der sich in longitudinaler Richtung des Profils erstreckt und in dem ein LED-Streifen (54) zum Zwecke des Beleuchtens des Torblatts aufgenommen ist.

9. Torblatt nach einem der vorherigen Ansprüche, **dadurch gekennzeichnet, dass** das Tor einen horizontalen oberen Träger (3) und einen horizontalen unteren Träger (2) umfasst, wobei der obere Träger und untere Träger jeweils mit einem Kanal zum Führen des Tors vorgesehen sind, wobei der obere Träger und/oder der untere Träger die Form eines rohrförmigen Profils aufweisen, das einen Kanal aufweist, der sich in longitudinaler Richtung des Profils erstreckt und in dem ein LED-Streifen (54) zum Zwecke eines Beleuchtens des Torblatts aufgenommen ist.

10. Torblatt nach Anspruch 9, **dadurch gekennzeichnet, dass** der obere Träger die Form eines rohrförmigen Profils aufweist, das mit einem nach unten geöffneten Führungskanal (52) vorgesehen ist, für ein Set von Führungsrollen (51) zum Führen des Tors, wobei der Kanal in dem der LED-Streifen aufgenommen ist, oberhalb des Führungskanals vorgesehen ist.

11. Torblatt nach einem der vorherigen Ansprüche, **dadurch gekennzeichnet, dass** das Torblatt einen horizontalen oberen Träger (3) umfasst, und dass der obere Träger auf seiner oberen Seite mit einer Reihe von Solarzellen vorgesehen ist, die mit dem Energiespeichersystem, das in dem Torblatt angeordnet ist, verbunden sind.

## Revendications

1. Barrière (1), comprenant une traverse horizontale (2) et un certain nombre de barres verticales (4), dans laquelle des moyens d'éclairage (14 ; 24, 45) sont reçus sur la barrière, dans laquelle la barrière comporte une première bobine (11) agencée de telle sorte qu'elle peut coopérer avec une seconde bobine statique (12) agencée de manière adjacente à la barrière et raccordée à une source d'alimentation (10), dans laquelle les moyens d'éclairage sont couplés à la première bobine de telle sorte qu'ils sont alimentés par l'intermédiaire de cette première bobine ; **caractérisée en ce que**
la barrière comprend un profilé supérieur horizontal (3) et un profilé d'extrémité vertical (6), dans laquelle un profilé d'angle (21) est reçu entre le profilé supérieur horizontal et le profilé d'extrémité vertical, et dans laquelle les moyens d'éclairage (14 ; 24, 45) sont agencés sur ce profilé d'angle,
et **en ce que** les moyens d'éclairage sont agencés entre un support (22) et un couvercle externe translucide (23), dans lequel le support est fixé dans ou sur le profilé d'angle.

2. Barrière selon la revendication 1, **caractérisée en ce que** le profilé d'angle est un profilé d'angle à plusieurs composants (21, 25), et **en ce que** les moyens d'éclairage sont reçus sur un ensemble (20) agencé à force sur le profilé d'angle à plusieurs composants.

3. Barrière selon la revendication 1, **caractérisée en ce que** la première bobine est agencée sur la barrière de telle sorte que, au cours du mouvement, elle est couplée par induction à la seconde bobine statique.

4. Barrière selon la revendication 2 ou 3, **caractérisée en ce qu**'il est placé sur la barrière un support allongé (13) en un matériau électromagnétique qui s'étend à travers la première bobine et la seconde bobine statique afin d'assurer un couplage inductif de la première bobine à la seconde bobine.

5. Barrière selon l'une quelconque des revendications 2 à 4 précédentes, **caractérisée en ce qu**'un dispositif de stockage d'énergie et des moyens de commande et/ou de régulation (15) sont incorporés dans la barrière, dans laquelle la première bobine est raccordée au dispositif de stockage d'énergie et les moyens de commande et/ou de régulation sont adaptés afin d'activer les moyens d'éclairage avec de l'énergie provenant du dispositif de stockage d'énergie.

6. Barrière selon l'une quelconque des revendications précédentes, **caractérisée en ce que** les moyens d'éclairage sont adaptés afin de produire une lumière clignotante.

7. Barrière selon l'une quelconque des revendications précédentes, **caractérisée en ce que** les moyens d'éclairage (14 ; 24, 45) sont agencés à proximité d'un angle de la barrière au niveau d'une extrémité externe adjacente à l'ouverture de barrière dans la position ouverte de la barrière.

8. Barrière selon l'une quelconque des revendications précédentes, **caractérisée en ce que** le profilé supérieur horizontal présente la forme d'un profil tubulaire comportant un canal qui s'étend dans la direction longitudinale de celui-ci et dans lequel une bande de diodes LED (54) est reçue pour les besoins d'éclairage de la barrière.

9. Barrière selon l'une quelconque des revendications précédentes, **caractérisée en ce que** la barrière comprend une traverse supérieure horizontale (3) et une traverse inférieure horizontale (2), la traverse supérieure et la traverse inférieure comportant chacune un canal destiné à guider la barrière, dans laquelle la traverse supérieure et/ou la traverse inférieure présente la forme d'un profilé tubulaire comportant un canal qui s'étend dans la direction longitudinale de celui-ci et dans laquelle une bande de diodes LED (54) est reçue dans le but d'assurer l'éclairage de la barrière.

10. Barrière selon la revendication 9, **caractérisée en ce que** la traverse supérieure présente la forme d'un profilé tubulaire qui comporte un canal de guidage d'ouverture vers le bas (52) destiné à positionner des rouleaux de guidage (51) afin de guider la barrière, dans laquelle le canal dans lequel la bande de diodes LED est reçue est formé au-dessus du canal de guidage.

11. Barrière selon l'une quelconque des revendications précédentes, **caractérisée en ce que** la barrière comprend une traverse supérieure horizontale (3), et **en ce que** la traverse supérieure comporte, sur sa face supérieure, une série de cellules photoélectriques raccordées à un dispositif de stockage d'énergie agencé sur la barrière.
